Europäisches Patentamt

(19) European Patent Office

Office européen des brevets

(11) Publication number: **0 190 924**
**A2**

(12) **EUROPEAN PATENT APPLICATION**

(21) Application number: 86300765.4

(22) Date of filing: 05.02.86

(51) Int. Cl.⁴: **B 60 S 3/04**

(30) Priority: 05.02.85 ZA 850864

(43) Date of publication of application:
13.08.86 Bulletin 86/33

(84) Designated Contracting States:
AT BE CH DE FR GB IT LI LU NL SE

(71) Applicant: DIPPY AUTO WASHER C.C.
9 Liverpool Road Industrial Sites
Benoni Transvaal(ZA)

(72) Inventor: Talbot, John
10 Boshoff Street Libradene
Boksburg Transvaal(ZA)

(74) Representative: Ranson, Arthur Terence et al,
W.P. Thompson & Co. Coopers Building Church Street
Liverpool L1 3AB(GB)

(54) Vehicle washing device.

(57) A washing device includes a pump (10,100) immersible in a countainer of washing liquid. The pump is designed to operate with a 12V or 24V DC supply from the battery of a vehicle which is to be washed using the equipment. Pumped liquid is supplied to a washing head (200, 300, 400, 500) which is interchangeable depending on which part of the vehicle is to be washed. In one version, the pump is a positive displacement pump (10), while in another version, the pump is a centrifugal pump (100).

FIG. 1

Croydon Printing Company Ltd.

## DESCRIPTION

### "VEHICLE WASHING DEVICE".

The present invention relates to a vehicle washing device.

The problems associated with the water shortage in areas such as Southern Africa require little elaboration. In some areas, statutory restrictions on the use of garden hoses make it particularly difficult for motor vehicle owners to clean their vehicles. The use of a bucket of soapy water, which is the normal solution, is time-consuming and the results are not good.

The present invention seeks to provide a solution for this problem.

In accordance with the present invention, there is provided a vehicle washing device, which comprises a liquid pump immersible in a container of washing liquid and arranged to be powered by a battery of a motor vehicle, a plug insertable into a cigarette lighter socket of the vehicle for establishing a flow of electricity to the pump to power it, a flexible hose connected to the outlet of the pump and a washing head attachable to the free end of the hose, the washing head being movable manually over the vehicle to distribute onto the vehicle liquid pumped from the container through the hose by the pump.

In a preferred embodiment of the invention, the pump is a positive displacement pump. In this embodiment, the pump may include a piston reciprocable in a chamber having an inlet and an outlet communicating respectively in use with the container and with the hose, one-way valves in the inlet and in the outlet, a solenoid arranged to receive current from the cigarette lighter socket via the plug and, when energised, to drive the piston in a first direction in the chamber to expel liquid from the chamber into the hose through the outlet, the outlet valve being open and the inlet valve being closed, biasing means urging the piston in a second direction opposite to the first to draw liquid into the chamber with the inlet valve open and the outlet valve closed, and switching means serving to energise the solenoid when the piston has moved in the second direction and to de-energise the solenoid when the piston has moved in the first direction.

In another embodiment of the present invention, the pump is a centrifugal pump. In this embodiment, the pump may include a casing, a 12V or 24V DC motor in the casing carrying an impeller on its output shaft, and being arranged to receive current from the cigarette lighter socket via the plug, the impeller being rotatable by the motor in a chamber having an inlet and an outlet communicating respectively in use with the container and with the hose, and means serving to maintain the casing at a predetermined elevation with respect to the level of liquid in the container so that the inlet and outlet are submersed in the liquid in use. Preferably, the means serving to maintain the elevation of the casing is a float secured to the casing.

With either embodiment, the washing head may comprise a perforated distributor body surrounded by sponge material. Preferably, the sponge material surrounding the distributor body is composed of at least two parts of different coarseness.

By way of example only, specific embodiments of the present invention will now be described, with reference to the accompanying drawings, in which:-

Fig.1 shows a schematic view, partly sectioned, of a first version of the invention;

Fig.2 shows a schematic view, partly sectioned, of a second version of the invention; and

Figs.3 to 6 show various different washing heads which can be used with either version.

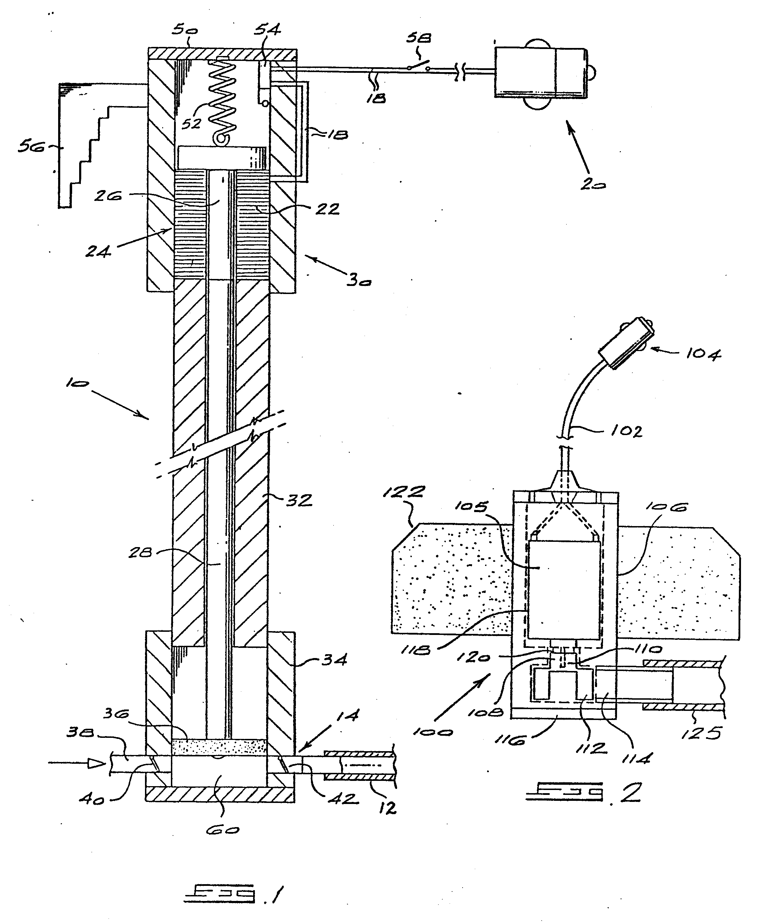

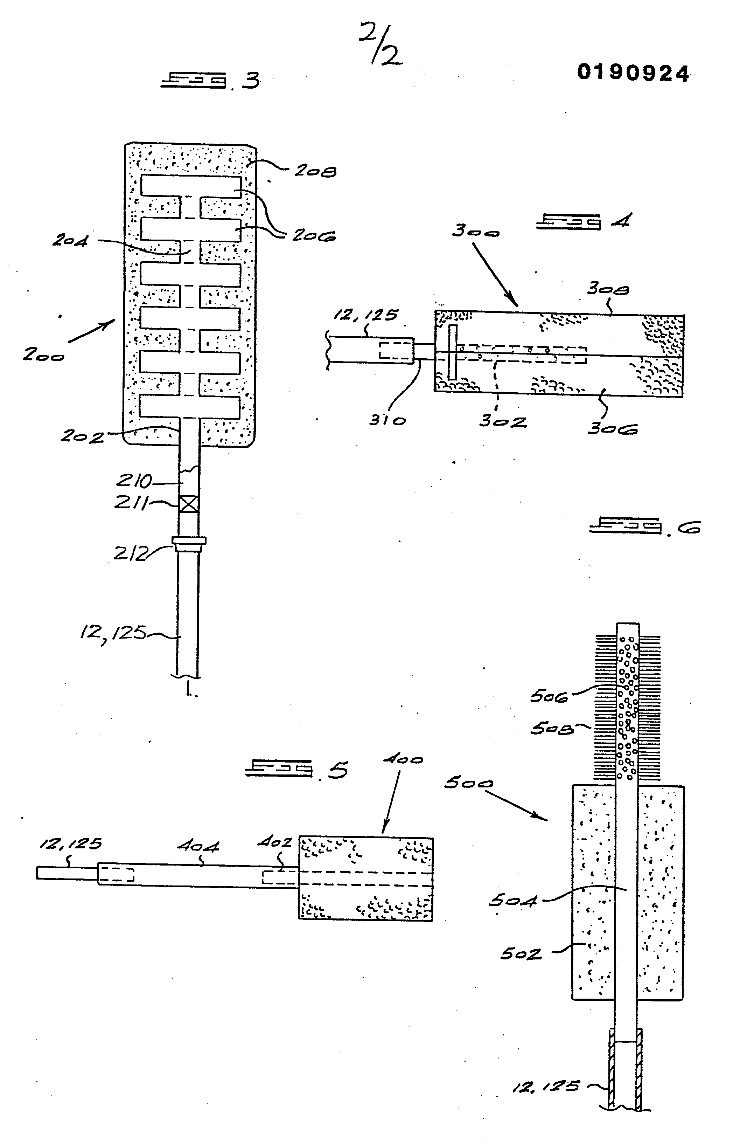

In the embodiment of Fig.1, there is a pump designated by the numeral 10 and a flexible hose 12 connected to the pump outlet. In use, the other end of the hose 12 is connected to a washing head, various types of which are described later with reference to Figs. 3 to 6 of the drawings.

The pump 10 is powered by the 12V or 24V DC battery of the vehicle which is to be cleaned, and electrical leads 18 conveying current to the pump are connected to a conventional plug 20 which can be inserted into the cigarette lighter socket of the vehicle (not shown). The opposite ends of the lead 18 are connected to the coil 22 of a solenoid 24, the coil surrounding a movable soft iron plunger 26. A nylon piston rod 28 is connected to the lower end of the plunger, for example by means of a threaded spigot at the upper end of the rod screwed into a correspondingly threaded socket at the lower end of the plunger. The solenoid is housed in a lidded casing 30 and the rod 28 is free to move up and down in a round cylindrical sheath 32 secured to the casing 30.

The lower end of the sheath 32 is connected to a cylinder 34 in which a piston head 36 secured to the lower end of the rod 28 can reciprocate. The piston head 36 is made of TEFLON (trademark) or other low friction material with good wear characteristics. The cylinder 34 has an inlet 38 and an outlet 14, each being fitted with a non-return flap valve 40,42.

Attached to the lid 50 of. the casing 30 is a helical tension spring 52 hooked to the upper end of the plunger 26. The spring urges the plunger upwardly i.e. out of the coil 22. The lid 50 also carries a micro-switch 54 which can be contacted by the upper end of the plunger. The micro-switch 54 is connected across the leads 18 between the plug 20 and the coil 22. Connected to the casing 30, there is a hook 56.

In use, the pump is suspended in a bucket of water, which may have mixed with it a suitable detergent, by means of the hook 56, which is located over the upper edge of the bucket.. The inlet and outlet are immersed in the liquid. The plug 20 is inserted into the cigarette lighter socket of the vehicle and the power supply is established by means of the switch 58.

At the commencement of operations, the plunger is raised by the spring 52, and touches the contact of the micro-switch 54. Once the solenoid is energised, the plunger is drawn downwardly into the coil, and the micro-switch contact is broken, terminating the supply of current to the coil. The spring 52 pulls the plunger back again, and the process repeats itself.

Reciprocation of the plunger is transferred through the rod 28 to the piston head 36. On the upward stroke of the piston head, liquid is drawn from the bucket into the cylinder chamber 60, the valve 42 being closed

0190924

and the valve 40 being open.  On the downward stroke, the valve 40 closes and the valve 42 opens to allow  the chamber  60 to  be exhausted  by the descending piston head 36.

The result is a pulsating flow of liquid delivered through the hose 12 to a distributor body, e.g. 202 (Figure 3), the valve 47 being open. Thus the pump 10 in this embodiment acts as a positive displacement pump.

Referring to  Figure 2,   another  embodiment  of  the  invention  has  a centrifugal  pump 100  instead of  the positive  displacement pump  10 of Figure 1.  Here, electrical leads 102 extend from a conventional plug 104 which  can  be  inserted  into  a cigarette  lighter socket, to a 12V; or 24V DC electric motor 105 housed in a waterproof casing 106.

A chamber  108 is  formed in  the lower  part of  the casing  106 and the output shaft 110 of the motor 105 extends into this  chamber where  it is connected fast  to a  radial vane  impeller 112.    An outlet 114 extends tangentially from the chamber 108, and there is an axial inlet 116 at the base of the casing 106.

Between the  chamber 118 in the casing which houses the motor 105 and the chamber 108,  there is an annular neoprene seal 120 surrounding the shaft 110 and  preventing liquid  in the  chamber 108 from entering the chamber 118 and affecting the motor.

Secured to the casing 106 is an annular float 122  of polystyrene  or the like which is positioned to ensure that, when the pump 100 is placed in a bucket or other container of washing liquid,  the inlet 116,  outlet 114 and chamber  108 are  immersed in  the liquid  with the  remainder of the casing 106 above the level of the liquid.

A  flexible  hose  125  corresponding  to  the  hose  12 of  the previous embodiment is  connected up  to a  rigid spigot 124 extending  from  the outlet 114.

In operation, when the plug 104 is inserted into the cigarette lighter socket of the vehicle and the flow of current to the motor 105 is established, the impeller is rotated in the chamber 108. Liquid drawn into the chamber 108 is expelled continously through the outlet 114 and into the hose 125 along which it proceeds to a washing head for distribution onto the vehicle which is being washed.

Various types of washing head suitable for use with either of the described embodiments are shown in Figures 3 to 6.

In Figure 3, the washing head 200 has a rigid distributor body 202 of plastics. The body has a central passage 204 and a series of annular chabers 206 about the central passage. The central passage and the chambers are formed with a series of fine perforations, and are surrounded by a sponge 208 though which liquid arriving in the body 202 is dispersed. The body 202 includes a spigot 210 with a manually operable stop-cock 211 therein and a quick-coupler 212 by means of which it can be connected up to the flexible hose 12 or 125.

In Figure 4, the washing head 300 has a distributor body 302 in the form of a straight, finely perforated pipe. Two sponge parts 306, 308 mate with one another to surround the pipe 304. The sponge part 306 is coarser than the part 308, and the user therefore has the choice of which part he will use to wash a particular part of his vehicle. There is a protruding spigot 310 onto which the end of the flexible hose 12, 125 can be slipped to supply washing liquid to the body 302. A manually operable flow control valve can be included in the spigot.

In Figure 5, the washing head 400 is similar in most respects to that shown in Figure 4. There is also a protruding spigot 402 corresponding to the spigot 310. In this case, a hollow rigid handle 404 has one end slipped onto the spigot 402, the opposite end of the handle receiving the end of the flexible hose 12, 125. Once again, a manually operable valve is possible for controlling flow to the washing head.

0190924

In Figure 6, the washing head 500 has a handle 502 through which passes a rigid spigot 504 extending from the hose 12, 125 to a perforated distributor body 506 in the form of a straight pipe. Instead of a sponge, the body 506 has a great number of radially extending, relatively stiff bristles 508. This embodiment can be used to wash nooks and crannies of the vehicle.

In each case the washing head 200, 300, 400 or 500 is moved manually over the area to be washed while liquid is pumped to it. Various other kinds of washing heads are also possible, the heads in each case being interchangeable to suit the particular part of the vehicle which is to be washed.

## CLAIMS

1. A vehicle washing device, characterized in that it comprises a liquid pump (10,100) immersible in a container of washing liquid and arranged to be powered by a battery of a motor vehicle, a plug (20,105) insertable into a cigarette lighter socket of the vehicle for establishing a flow of electricity to the pump (10,100) to power it, a flexible hose (12,125) connected to the outlet of the pump (10,100) and a washing head attachable to the free end of the hose, the washing head (200,300,400) being movable manually over the vehicle to distribute onto the vehicle liquid pumped from the container through the hose by the pump.

2. A vehicle washing device as claimed in claim 1, characterized in that the pump (10) is a positive displacement pump.

3. A vehicle washing device as claimed in claim 2, characterized in that the pump (10) comprises a piston (36) reciprocable in a chamber (34) having an inlet (38) and an outlet (14) communicating respectively in use with the container and with the hose (12), one-way valves (40,42) in the inlet and in the outlet, a solenoid (24) arranged to receive current from the cigarette lighter socket via the plug (20) and, when energised, to drive the piston (36) in a first direction in the chamber (34) to expel liquid from the chamber (34) into the hose (12) through the outlet (14), the outlet valve (42) being open and the inlet valve (40) being closed, biasing means (52) urging the piston (36) in a second direction opposite to the first to draw liquid into the chamber (34) with the inlet valve (40) open and the outlet valve (42) closed, and switching means (54) serving to energise the solenoid (24) when the piston (36) has moved in the second direction and to de-energise the solenoid (24) when the piston (36) has moved in the first direction.

4. A vehicle washing device as claimed in claim 3, characterized by a lidded casing (30) accommodating the solenoid (24), a plunger (26) movable by the solenoid, a piston rod (28) connected to the plunger (26) and to the piston (36) and a tension spring (52) connected between the upper end of the plunger (26) and the lid of the casing.

5. A vehicle washing device as claimed in claim 4, characterized in that the switching means (54) is a micro-switch arranged to be contacted by the upper end of the plunger (26) when the plunger is drawn towards the lid (50) of the casing (30) by the tension spring (52).

6. A vehicle washing device as claimed in any of the preceding claims, characterized by means (56) for engaging the periphery of the container and for suspending the pump (10,100) in liquid in the container.

7. A vehicle washing device as claimed in claim 1, characterized in that the pump (100) is a centrifugal pump.

8. A vehicle washing device as claimed in claim 7, characterized by a casing (106), a DC motor (105) in the casing (106) carrying an impeller (112) on its output shaft (110), and being arranged to receive current from the cigarette lighter socket via the plug (104), the impeller (112) being rotatable by the motor (105) in a chamber (108) having an inlet (116) and an outlet (114) communicating respectively in use with the container and with the hose (125), and means (122) serving to maintain the casing (106) at a predetermined elevation with respect to the level of liquid in the container so that the inlet (116) and outlet (114) are submersed in the liquid in use.

9. A vehicle washing device as claimed in claim 8, characterized in that the means (122) serving to maintain the elevation of the casing is a float (122) secured to the casing (106).

10. A vehicle washing device as claimed in any of the preceding claims, characterized in that the washing head (200,300,400) comprises a perforated distributor body (202,302) surrounded by sponge material (208,306,308).

11. A vehicle washing device as claimed in claim 10, characterized in that the sponge material surrounding the distributor body (302), is composed of at least two parts (306,308) of different coarseness.

12. A vehicle washing device as claimed in any of claims 1 to 9, characterized in that the washing head (500) comprises a slender perforated distributor body (506) with projecting bristles (508).

13. A vehicle washing device as claimed in any of the preceding claims, characterized in that the washing head (400,500) has a handle (404, 502).

..........................................................

FIG. 1

FIG. 2

Fig. 3

Fig. 4

Fig. 5

Fig. 6